# EUROPÄISCHE PATENTSCHRIFT

(11) **EP 1 729 025 B1**
(45) Veröffentlichungstag und Bekanntmachung des Hinweises auf die Patenterteilung: **29.04.2009**
(21) Anmeldenummer: 05011817.3
(22) Anmeldetag: 01.06.2005
(51) Int. Cl.: F16D 25/10, F16D 21/06, F16D 25/0638

(54) **Mehrfachkupplungseinrichtung**
Mulitple clutch device
Dispositif d'embrayage multiple

(43) Veröffentlichungstag der Anmeldung: 06.12.2006
(73) Patentinhaber: BorgWarner, Inc., Auburn Hills, MI 48326-2872 (US)
(72) Erfinder: Gerlach, Martin, 68526 Ladenburg (DE); Gold, Eckart, 68766 Hockenheim (DE)
(74) Vertreter: Patentanwälte Westphal, Mussgnug & Partner

(56) Entgegenhaltungen:
- EP-A- 0 282 169
- EP-A- 1 048 868
- DE-A1- 10 146 606

## Beschreibung

Die Erfindung betrifft eine Mehrfachkupplungseinrichtung, insbesondere Doppelkupplungseinrichtung, nach dem Oberbegriff des Patentanspruchs 1.

Mehrfachkupplungen für Kraftfahrzeuge werden häufig nach der Art ihrer Reibpartner in trockene oder nasse, d.h. mittels flüssigem Kühlmediums gekühlte, Kupplungen unterschieden. Man kann Mehrfachkupplungen, insbesondere Doppelkupplungen, auch nach ihrer Anordnung unterscheiden. Insbesondere bei den nassen Doppelkupplungen gibt es die radial ineinander geschachtelte Bauart ("konzentrische Anordnung"), bei der die beim Betätigen in Reibschluss verbrachten Reibscheiben einer radial äußeren Kupplung die entsprechenden Reibscheiben einer radial inneren Kupplung umschließen, und die axial hintereinander angeordnete Bauart, bei der die Reibscheiben der Kupplungen längs einer gemeinsamen Drehachse hintereinander angeordnet sind ("parallele Anordnung").

Eine Mehrfachkupplung in paralleler Bauart entnimmt man z.B. den Dokumenten EP 1 195 537 A1 und EP 0 282 169 A1 . Mehrfachkupplungen in radial geschachtelter Bauart sind z.B. in der EP 0 758 434 B1, der DE 101 11 202 A1, der DE 102 31 405 A1, der DE 102 22 933 A1, der DE 203 10 015 Ul, der DE 102 03 618 A1, der DE 102 23 892 A1, der DE 100 04 186 A1 oder der DE 100 04 189 A1 beschrieben.

Obwohl sich die Erfindung grundsätzlich auf nasslaufende Mehrfachkupplungen im allgemeinen bezieht, wird nachfolgend zur Erläuterung der der Erfindung zugrunde liegenden Problematik auf Doppelkupplungen in radial geschachtelter Bauart Bezug genommen. Diese Art von Kupplungen weisen jeweils eine erste und eine zweite Kupplung mit jeweils einem Außenlamellen tragenden Außenlamellenträger und mit jeweils einem Innenlamellen tragenden Innenlamellenträger auf. Die Lamellen der beiden Kupplungen sind um eine gemeinsame Drehachse drehbar gelagert. Die Lamellen der ersten Lamellenkupplung und die Lamellen der zweiten Lamellenkupplung sind in der Regel im gleichen axialen Abschnitt angeordnet, wobei die Lamellen der ersten Lamellenkupplung radial außerhalb der Lamellen der zweiten Lamellenkupplung angeordnet sind, so dass die Lamellen der ersten Lamellenkupplung die Lamellen der zweiten Lamellenkupplung radial umgreifen. Die erste Kupplung wird daher allgemein als radial äußere Lamellenkupplung, die zweite als radial innere Lamellenkupplung bezeichnet.

Jede der Kupplungen umfasst einen Betätigungskolben, mit dessen Hilfe die Lamellen der jeweiligen Kupplung in Reibschluss verbracht werden können. Jeder Betätigungskolben ist in einem entsprechenden Zylinder axial verschieblich geführt. Zylinder und Betätigungskolben bilden jeweils einen sogenannten Druckraum, welcher mittels eines Fluids, insbesondere mit Hilfe von Hydraulikflüssigkeit, mit einem Druck beaufschlagt werden kann, um die Lamellen in (oder ggf. auch außer) Reibeingriff zu verbringen. Häufig ist zusätzlich einem oder beiden Betätigungskolben ein sogenannter Ausgleichskolben zugeordnet. Betätigungskolben und Ausgleichskolben bilden einen sogenannten Ausgleichsraum. Diesem Ausgleichsraum ist ebenfalls ein Fluid zuführbar oder mit einem Fluid, also z.B. Hydraulikflüssigkeit, befüllt. Das in diesem Ausgleichsraum befindliche Fluid dient dazu, eine mit zunehmender Drehzahl auftretende fliehkraftbedingte Drucküberhöhung im Druckraum (weitgehend) auszugleichen. In manchen Fällen kann auch eine Unter- oder Überkompensation dieser Drucküberhöhung wünschenswert sein.

Die Erfindung bezieht sich auf Mehrfachkupplungen, bei denen unterschiedlichen Betätigungskolben entsprechende Ausgleichsräume zugeordnet sind. Derartige Mehrfachkupplungen weisen einen vergleichsweise großen axialen Bauraumbedarf, weil für jeden dieser Ausgleichsräume entsprechende Kanäle vorhanden sein müssen, um die Ausgleichsräume mit dem zur Fliehkraftkompensation erforderlichen Fluid befüllen zu können.

Die Aufgabe der Erfindung besteht nunmehr darin, eine Mehrfachkupplung der gattungsgemäßen Art derart auszuführen und weiterzubilden, dass deren axialer Bauraumbedarf gegenüber herkömmlichen Mehrfachkupplungen reduziert ist.

Diese Aufgabe wird bei einer Mehrfachkupplung mit den Merkmalen des kennzeichnenden Teils des Patentanspruchs 1 gelöst.

Vorteilhafte Ausführungen und Weiterbildungen der Erfindung sind in den Unteransprüchen angegeben.

Ausgangspunkt ist eine Mehrfachkupplungseinrichtung, insbesondere Doppelkupplungseinrichtung, mit zwei Kupplungen , welche jeweils einen Druckraum, einen Ausgleichsraum und eine Fluidzuführeinrichtung für den jeweiligen Ausgleichsraum aufweisen. Anders als bei Mehrfachkupplungen nach dem Stand der Technik, welche für jeden Ausgleichsraum separate von einem gemeinsamen Reservoir gespeiste Fluidzuführeinrichtungen aufweisen, sieht die Erfindung vor, dass die Fluidzuführeinrichtung für den Ausgleichsraum der ersten Kupplung mit dem Ausgleichsraum der zweiten Kupplung verbunden ist. Anstelle einer Parallelschaltung der Ausgleichsräume mit Hilfe zweier separater Fluidzuführeinrichtungen ist gemäß der Erfindung eine Reihenschaltung der Ausgleichsräume der beiden Kupplungen vorgesehen. Während die Parallelschaltung nach dem Stand der Technik die axiale Anordnung zweier Fluidzuführeinrichtungen erfordert, um die Ausgleichsräume zweier Kupplungen mit Fluid befüllen zu können, kann gemäß der Erfindung auf eine dieser Fluidzuführeinrichtungen verzichtet werden. Der axiale Bauraumbedarf lässt sich auf diese Weise im Bereich der Fluidzufuhr verringern. Durch zusätzliche radial geschachtelte Anordnung der Kupplungspakete und der Aktuatoren (Betätigungskolben) lässt sich die axiale Baulänge signifikant verringern.

Neben der axialen Verkürzung, die verringerten Materialeinsatz (Gewichts- und Kostenvorteile) mit sich bringt, können die Druck- und Ausgleichskolben auch so gestaltet werden, dass sie aus derselben Platine z.B. gestanzt werden können, was zu einem weiteren Kostenreduzierungspotential führt.

Erfindungsgemäß ist vorgesehen, dass die Fluidzuführeinrichtung für den Ausgleichsraum der ersten Kupplung zumindest teilweise in den Betätigungskolben der zweiten Kupplung integriert ist. Anders ausgedrückt ist der Betätigungskolben der zweiten Kupplung derart ausgebildet, dass dieser die Fluidzuführeinrichtung für den Ausgleichsraum der ersten Kupplung wenigstensteilweise aufnimmt. Dadurch kann zum einen der Platzbedarf als auch der Materialbedarf gesenkt werden.

Der Betätigungskolben der zweiten umfasst Kupplung zwei Betätigungskolbenelemente. Diese Betätigungskolbenelemente schließen Durchtrittsöffnungen zwischen sich ein, welche Bestandteil der Fluidzuführeinrichtung für den Ausgleichsraum der ersten Kupplung sind. Eine zweiteilige Ausführung des Betätigungskolbens lässt sich sehr einfach und damit kostengünstig herstellen.

In einer vorteilhaften Ausführungsvariante der Erfindung ist vorgesehen, dass der Ausgleichsraum der zweiten Kupplung eine Überlauföffnung aufweist und dass die Fluidzuführeinrichtung für den Ausgleichsraum der ersten Kupplung mit der Überlauföffnung des Ausgleichsraums der zweiten Kupplung verbunden ist. Überschüssiges Fluid (z.B. Kühlöl) kann dann von dem Ausgleichsraum der zweiten Kupplung zum Ausgleichraum der ersten Kupplung gelangen. Ein separates Ventil oder dergleichen ist bei dieser Ausführungsvariante nicht vorgesehen.

Die Durchtrittsöffnungen lassen sich z.B. dadurch bilden, dass wenigstens einer der beiden Betätigungskolbenelemente, z.B. axial abstehende und ggf. radial ausgerichtete Stege aufweist. Beide Betätigungskolbenelemente werden axial benachbart zueinander angeordnet, so dass sie durch die Stege voneinander beabstandet werden. Zwischen den Stegen und den radial verlaufenden Wandungen der Betätigungskolbenelemente werden dabei gleichzeitig Durchtrittsöffnungen gebildet.

Wenigstens eine der den Ausgleichsraum der ersten Kupplung bildenden Wandungen weist eine Durchtrittsöffnung auf, welche den Ausgleichsraum der ersten Kupplung mit der Fluidzuführeinrichtung für den Ausgleichsraum der ersten Kupplung verbindet.

Auch der Ausgleichsraum der ersten Kupplung kann eine oder mehrere Überlauföffnungen aufweisen. Eine unerwünschte Überkompensation bzw. eine eine gewünschte Überkompensation übersteigende Kompensation wird dadurch verhindert.

Es hat sich als sehr günstig erwiesen, wenn die wenigstens eine Überlauföffnung des Ausgleichsraums der ersten Kupplung in einen zu einem Lamellenpaket der ersten Kupplung führenden Zuführkanal mündet. Das durch diese Überlauföffnungen hindurchtretende Fluid kann auf diese Weise zur Kühlung des Lamellenpakets der ersten Kupplung verwendet werden.

Die Erfindung wird nunmehr anhand der Zeichnungen näher beschrieben. Es zeigen:

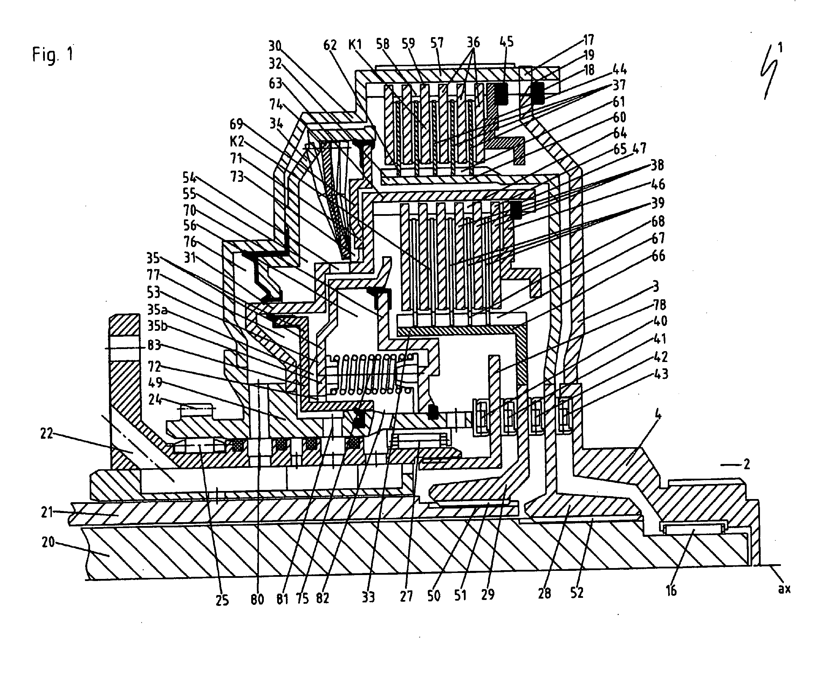

- Figur 1: ein Ausführungsbeispiel einer erfindungsgemäßen Doppelkupplung in radial geschachtelter Bauart im Axialhalbschnitt.

Die Figur 1 zeigt ein Ausführungsbeispiel einer erfindungsgemäßen Doppelkupplung 1 in radial geschachtelter Anordnung im Axialhalbschnitt. Sie umfasst zwei Lamellenkupplungen K1, K2.

Die erste Kupplung K1 umfasst einen Außenlamellenträger 30 sowie einen Innenlamellenträger 32. Außenlamellenträger 30 und Innenlamellenträger 32 sind um eine Drehachse ax gegeneinander drehbar gelagert. Beide Lamellenträger 30, 32 sind in der Art von Halbschalen mit einem scheibenförmigen Bereich und einem zylindrischen Bereich 57, 60 ausgebildet. Der zylindrische Bereich 57 des Außenlamellenträgers 30 weist am Innenumfang eine Innenverzahnung 58 auf. In diese Innenverzahnung 58 greift jeweils eine entsprechende Außenverzahnung 59 von im vorliegenden Ausführungsbeispiel als Stahllamellen ausgeführten Außenlamellen 36 ein. In korrespondierender Weise weist der zylindrische Bereich 60 des Innenlamellenträgers 32 am Außenumfang eine Außenverzahnung 61 auf, in welche eine entsprechende Innenverzahnung 62 hier als Belaglamellen ausgeführter Innenlamellen 37 eingreift. Außenlamellen 36 und Innenlamellen 37 sind ein Lamellenpaket bildend zwischen die zylindrischen Bereiche 57, 60 der Außen- bzw. Innenlamellenträger 30, 32 eingeführt, indem in axialer Richtung jeweils auf eine Außenlamelle 36 eine Innenlamelle 37 folgt und umgekehrt. Das Lamellenpaket schließt einendseitig mit einer Endplatte 44 ab. Diese Endplatte 44 stützt sich wiederum andersseitig an einem Sicherungsring 45 am Außenlamellenträger 30 ab. Die Außen- und Innenlamellen 36, 37 des Lamellenpakets sind mittels eines Betätigungskolbens 34 in Reibeingriff und außer Reibeingriff verbringbar.

Die zweite Lamellenkupplung K2 ist prinzipiell in gleicher Weise wie die erste Lamellenkupplung K1 ausgeführt. Auch hier ist ein halbschalenförmiger Außenlamellenträger 31 mit einem scheibenförmigen und einem zylindrischen Bereich 63 und ein halbschalenförmiger Innenlamellenträger 33 mit einem scheibenförmigen und einem zylindrischen Bereich 66 vorgesehen. Außenlamellenträger 31 und Innenlamellenträger 33 sind um die Drehachse ax gegeneinander drehbar gelagert. Der zylindrische Teil 63 des halbschalenförmigen Außenlamellenträgers 31 weist innenumfangsseitig eine Verzahnung 64 auf, in welche eine Außenverzahnung 65 entsprechender als Stahllamellen ausgeführter Außenlamellen 38 eingreift. Korrespondierend hierzu weist der zylindrische Abschnitt 66 der Innenlamellenträgerhalbschale 33 eine Außenverzahnung 67 auf, welche die Innenverzahnungen 68 entsprechender Innenlamellen 39 aufnimmt. Eine Innenlamelle 39 ist wiederum benachbart zu zwei Außenlamellen 38 und eine Außenlamelle 38 ist benachbart zu zwei Innenlamellen 39 ein Lamellenpaket bildend angeordnet. Das Lamellenpaket schließt einendseitig mit einer Endplatte 46 ab. Diese Endplatte 46 stützt sich wiederum andersseitig an einem Sicherungsring 47 am Außenlamellenträger 31 ab. Die Außen- und Innenlamellen 38, 39 können mit Hilfe eines Betätigungskolbens 35 in Reibeingriff und außer Reibeingriff verbracht werden.

Das Lamellenpaket der einen Kupplung K2 ist radial innerhalb des Lamellenpakets der anderen Kupplung K1 angeordnet. Darüber hinaus sind beide Lamellenpakete in etwa im gleichen axialen Abschnitt angeordnet. Die Kupplung K1 mit dem radial äußeren Lamellenpaket wird nachfolgend als radial äußere Lamellenkupplung K1, die andere als radial innere Lamellenkupplung K2 bezeichnet.

Der Außenlamellenträger 30 der radial äußeren Kupplung K1 und der Außenlamellenträger 31 der radial inneren Kupplung K2 sind drehfest mit einer ein Pumpenzahnrad 24 tragenden Kupplungsnabe 49 verbunden. Die Kupplungsnabe 49, welche im Wesentlichen die Form eines Zylinders aufweist, ist um die gemeinsame Drehachse ax am Außenumfang eines drehfesten Kupplungssupports 22 gelagert. Die drehbare Lagerung erfolgt über zwei Radialnadellager 25, 27.

Der Kupplungssupport 22 weist eine zylinderförmige Öffnung auf, welche eine Getriebeeingangswelle 21 aufnimmt. Die Getriebeeingangswelle 21 ist in der Form eines Hohlzylinders ausgeführt. Sie ist von einer weiteren als Vollwelle ausgeführten Getriebeeingangswelle 20 zentral durchsetzt und auf dieser mittels eines Radialnadellagers 50 um die gemeinsame Drehachse ax drehbar gelagert. Die Hohlwelle 21 ist über eine Steckverzahnung 51 mit einer Nabe 29 des Innenlamellenträgers 33 der radial inneren Kupplung K2 verbunden. Die Vollwelle 20 ist über eine Steckverzahnung 52 mit einer Nabe 28 des Innenlamellenträgers 32 der radial äußeren Lamellenkupplung K1 drehfest verbunden.

Der mit der Kupplungsnabe 49 drehfest verbundene Lamellenträger 30 der radial äußeren Kupplung K1 ist über eine Verzahnung 17 mit einer eingangsseitigen Mitnehmerscheibe 3 drehfest verbunden. Die Mitnehmerscheibe 3 trägt einendseitig einen Mitnehmerflansch 4, welcher über ein Radialnadellager 16 um die Drehachse ax drehbar auf der Vollwelle 20 gelagert ist. Die Mitnehmerscheibe 3 stützt sich im radial inneren Bereich axial über ein Axialnadellager 43 am scheibenförmigen Bereich des Innenlamellenträgers 30 der radial äußeren Kupplung K1 ab. Dieser scheibenförmige Bereich des Innenlamellenträgers 30 der radial äußeren Kupplung K1 stützt sich im radial inneren Bereich axial über ein Axialnadellager 42 am scheibenförmigen Bereich des Innenlamellenträgers 33 der radial inneren Kupplung K2 ab. Der scheibenförmige Bereich des Innenlamellenträgers 33 der radial inneren Kupplung K2 stützt sich im radial inneren Bereich axial über ein Axialnadellager 41 an einem scheibenförmigen Bereich einer weiteren drehfest über eine Steckverzahnung 79 mit dem Kupplungssupport 22 verbundenen Halbschale 78 ab. Dieser scheibenförmige Bereich der Halbschale 78 stützt sich wiederum über ein weiteres Axialnadellager 40 axial an der Kupplungsnabe 49 ab. Das axiale Spiel der durch Axialnadellager 40, 41, 42, 43 drehbeweglich gegeneinander gelagerten Halbschalen 78, 33, 32, 3 wird über einen Federring 19 eingestellt, welcher Außenlamellenträger 30 und Mitnehmerscheibe 3 gegeneinander abstützt.

Der Mitnehmerflansch 4 bildet die Eingangsseite der Doppelkupplung 1. Der Innenlamellenträger 32 der radial äußeren Lamellenkupplung K1 und der Innenlamellenträger 33 der Kupplung K2 bilden die Ausgangsseiten der Doppelkupplung. Ein über den Mitnehmerflansch 4 auf die Kupplungsnabe 49 eingeleitetes Drehmoment wird demzufolge wahlweise je nach Stellung der beiden Betätigungskolben 34, 35 über einen der beiden Innenlamellenträger 31 oder 33 auf eine der beiden Getriebeeingangswellen 20, 21 übertragen.

Geht man nunmehr davon aus, dass von dem hier nicht dargestellten Verbrennungsmotor ein Drehmoment erzeugt wird, so wird dieses über die mit dem Mitnehmerflansch 4 drehfest verbundene (hier nicht dargestellte) Kurbelwelle 2, auf den Mitnehmerflansch 4 übertragen. Der Mitnehmerflansch 4 überträgt das Drehmoment weiter auf den Außenlamellenträger 30 der radial äußeren Kupplung sowie über die Kupplungsnabe 49 auch auf den Außenlamellenträger 31 der radial inneren Lamellenkupplung K2. Je nach Stellung der Betätigungskolben 34, 35 erfolgt eine Weiterleitung des Drehmoments über einen der beiden Innenlamellenträger 31, 33 auf eine der beiden Getriebeeingangswellen 20, 21.

Der Zeichnung entnimmt man, dass der Betätigungskolben 34 der radial äußeren Kupplung K1 zwischen dem Außenlamellenträger 30 der radial äußeren Kupplung K1 und dem Außenlamellenträger 31 der radial inneren Kupplung K2 axial verschieblich geführt ist. Die beiden Außenlamellenträger 30, 31 und der Betätigungskolben 34 schließen einen Druckraum 76 ein, welcher über einen Fluidzuführungskanal 80 mit dem zum Betätigen des Betätigungskolbens 34 erforderlichen Fluid beaufschlagbar ist. Zwischen dem Innenumfang des Betätigungskolbens 34 der radial äußeren Kupplung K1 und einem Außenumfang des Außenlamellenträgers 31 der radial inneren Kupplung K2 befindet sich ein weiterer Kolben, der sogenannte Ausgleichskolben 69, der radial äußeren Kupplung K1. Gegen diesen Ausgleichskolben 69 stützt sich der Betätigungskolben über eine Tellerfeder 74 ab. Der Betätigungskolben 34 der radial äußeren Kupplung K1 und der Ausgleichkolben 69 der radial äußeren Kupplung K1 schließen darüber hinaus einen Ausgleichsraum 55 ein. Diesem Ausgleichsraum 55 ist ein Fluid zuführbar. Das sich in diesem Ausgleichsraum 55 befindende Fluid dient dazu, eine mit zunehmender Drehzahl auftretende fliehkraftbedingte Druckerhöhung im Druckraum 76 vollständig auszugleichen.

In korrespondierender Weise ist auch die radial innere Kupplung K2 ausgeführt. Der Betätigungskolben 35 der radial inneren Kupplung K2 ist zwischen dem Außenlamellenträger 31 der radial inneren Kupplung K1 und dem Außenumfang der Kupplungsnabe 49 axial verschieblich geführt. Der Außenlamellenträger 31, die Kupplungsnabe 49 und der Betätigungskolben 35 der radial inneren Kupplung K2 schließen einen Druckraum 77 ein, welcher über einen Fluidzuführungskanal 81 mit dem zum Betätigen des Betätigungskolbens 35 erforderlichen Fluid beaufschlagt werden kann. Zwischen dem Innenumfang des Betätigungskolbens 35 der radial inneren Kupplung K2 und dem Außenumfang der Kupplungsnabe 49 befindet sich der Ausgleichskolben 70 der radial inneren Kupplung K2. Gegen diesen Ausgleichskolben 70 stützt sich der Betätigungskolben 35 der radial inneren Kupplung K2 über eine Mehrzahl in Umfangsrichtung angeordneter Schraubenfedern 75 ab. Der Betätigungskolben 35 der radial inneren Kupplung K2 und der Ausgleichkolben 70 der radial inneren Kupplung K2 schließen darüber hinaus einen Ausgleichsraum 56 ein. Diesem Ausgleichsraum 56 ist über einen Fluidzuführungskanal 82 ein Fluid zuführbar. Das sich in diesem Ausgleichsraum 56 befindende Fluid dient dazu, eine mit zunehmender Drehzahl auftretende fliehkraftbedingte Druckerhöhung im Druckraum 77 vollständig zu kompensieren.

Anders als im Stand der Technik wird jedoch der Ausgleichsraum 55 der radial äußeren Kupplung K1 nicht über einen eigenen parallel zu dem den Ausgleichsraum 56 der radial inneren Kupplung K1 speisenden Fluidzuführungskanal 82 angeordneten Fluidzuführungskanal mit Fluid versorgt, sondern die Fluidversorgung des Ausgleichsraums 55 der radial äußeren Kupplung K1 ist der Fluidversorgung des Ausgleichsraums 56 der radial inneren Kupplung K2 nachgeschaltet. Der Ausgleichsraum 55 der radial äußeren Kupplung K1 wird durch überschüssiges Fluid aus dem Ausgleichraum 56 der radial inneren Kupplung K2 gespeist. Zu diesem Zweck weist der Ausgleichsraum 56 der radial inneren Kupplung K2 eine Überlauföffnung 72 auf, welche über einen entsprechenden Kanal mit dem Ausgleichsraum 55 der radial äußeren Kupplung K1 verbunden ist. Der Fluidkanal wird durch die Ausführung des Betätigungskolbens 35 der radial inneren Kupplung K2 gebildet. Dieser Betätigungskolben 35 ist zweiteilig ausgeführt. Er umfasst zwei Halbschalen 35a, 35b. Die Halbschalen 35a, 35b sind so gestaltet, dass zwischen den Halbschalen 35a, 35b eine Mehrzahl im wesentlichen radial verlaufender Öffnungen 53 gebildet werden, welche das über die Überlauföffnung 72 aus dem Ausgleichsraum 56 der radial inneren Kupplung K2 austretende Fluid aufnehmen und längs den beiden Halbschalen 35a, 35b sowie dem Außenlamellenträger 31 der radial inneren Kupplung K2 zu einer Eintrittsöffnung 54 in den Ausgleichsraum 55 der radial äußeren Kupplung K1 leiten.

Der Ausgleichsraum 55 der radial äußeren Kupplung K1 weist selbst ebenfalls eine Überlauföffnung 73 auf, durch welche überschüssiges Fluid abfließen kann. Im vorliegenden Ausführungsbeispiel ist der Ausgleichskolben 69 der radial äußeren Kupplung derart gestaltet, dass zwischen diesem und der benachbarten Wandung des Außenlamellenträgers 31 der radial inneren Kupplung K2 Öffnungen 71 gebildet werden, durch welche das Fluid in den das Lamellenpaket der radial äußeren Kupplung K1 aufnehmenden Raum abfließen kann.

### Bezugszeichenliste

- 1: Doppelkupplung
- 2: Kurbelwelle
- 3: Mitnehmerscheibe
- 4: Mitnehmerflansch
- 16: Radialnadellager
- 17: Verzahnung
- 18: Sicherungsring
- 19: Federring
- 20: Vollwelle
- 21: Hohlwelle
- 22: Kupplungssupport
- 24: Pumpenantriebszahnrad
- 25: Radialnadellager
- 27: Radialnadellager
- 28: Nabe des Innenlamellenträgers der radial äußeren Kupplung
- 29: Nabe des Innenlamellenträgers der radial inneren Kupplung
- 30: Außenlamellenträger der radial äußeren Kupplung, Kupplungslocke
- 31: Außenlamellenträger der radial inneren Kupplung
- 32: Innenlamellenträger der radial äußeren Kupplung
- 33: Innenlamellenträger der radial inneren Kupplung
- 34: Betätigungskolben der radial äußeren Kupplung
- 35: Betätigungskolben der radial inneren Kupplung
- 35a: erster Betätigungskolbenelement
- 35b: zweiter Betätigungskolbenelement
- 36: Außenlamellen der radial äußeren Kupplung
- 37: Innenlamellen der radial äußeren Kupplung
- 38: Außenlamellen der radial inneren Kupplung
- 39: Innenlamellen der radial inneren Kupplung
- 40: Axialnadellager
- 41: Axialnadellager
- 42: Axialnadellager
- 43: Axialnadellager
- 44: Endplatte der radial äußeren Kupplung
- 45: Sicherungsring
- 46: Endplatte der radial inneren Kupplung
- 47: Sicherungsring
- 49: Kupplungsnabe
- 50: Radialnadellager
- 51: Steckverzahnung
- 52: Steckverzahnung
- 53: Durchtrittsöffnung
- 54: Durchtrittsöffnung
- 55: Ausgleichsraum der radial äußeren Kupplung
- 56: Ausgleichsraum der radial inneren Kupplung
- 57: zylindrischer Bereich
- 58: Innenverzahnung
- 59: Außenverzahnung
- 60: zylindrischer Bereich
- 61: Außenverzahnung
- 62: Innenverzahnung
- 63: zylindrischer Bereich
- 64: Innenverzahnung
- 65: Außenverzahnung
- 66: zylindrischer Bereich
- 67: Außenverzahnung
- 68: Innenverzahnung
- 69: Ausgleichskolben der radial äußeren Kupplung
- 70: Ausgleichskolben der radial inneren Kupplung
- 71: Durchtrittsöffnung
- 72: Überlauföffnung
- 73: Überlauföffnung
- 74: Tellerfeder
- 75: Schraubenfeder
- 76: Druckraum
- 77: Druckraum
- 78: Halbschale
- 79: Steckverzahnung
- 80: Fluidzuführungskanal
- 81: Fluidzuführungskanal
- 82: Fluidzuführungskanal
- 83: Steg

- K1: radial äußere Kupplung
- K2: radial innere Kupplung
- T: Torsionsschwingungsdämpfer
- ax: Drehachse

## Patentansprüche

1. Mehrfachkupplungseinrichtung, insbesondere Doppelkupplungseinrichtung (1),
a) mit einer ersten Kupplung (K1)
- mit einem Druckraum (76), dem ein Fluid zum Verschieben eines die erste Kupplung (K1) betätigenden Betätigungskolbens (34) zuführbar ist,
- mit einem Ausgleichsraum (55), dem ein Fluid zuführbar ist, um eine mit zunehmender Drehzahl auftretende fliehkraftbedingte Drucküberhöhung des Fluids im Druckraum (76) der ersten Kupplung (K1) wenigstens teilweise auszugleichen und
- mit einer Fluidzuführeinrichtung (54, 53, 72), um dem Ausgleichsraum (55) der ersten Kupplung (K1) das Fluid zum wenigstens teilweisen Ausgleich der fliehkraftbedingten Drucküberhöhung des Fluids im Druckraum (76) der ersten Kupplung (K1) zuzuführen,
b) mit einer zweiten Kupplung (K2)
- mit einem Druckraum (77), dem ein Fluid zum Verschieben eines die zweite Kupplung (K2) betätigenden Betätigungskolbens (35) zuführbar ist,
- mit einem Ausgleichsraum (56), dem ein Fluid zuführbar ist, um eine mit zunehmender Drehzahl auftretende fliehkraftbedingte Drucküberhöhung des Fluids im Druckraum (77) der zweiten Kupplung (K2) wenigstens teilweise auszugleichen und
- mit einer Fluidzuführeinrichtung (82), um dem Ausgleichsraum (56) der zweiten Kupplung (K2) das Fluid zum wenigstens teilweisen Ausgleich der fliehkraftbedingten Drucküberhöhung des Fluids im Druckraum (76) der zweiten Kupplung (K2) zuzuführen,
wobei die Fluidzuführeinrichtung (54, 53, 72) für den Ausgleichsraum (55) der ersten Kupplung (K1) mit dem Ausgleichsraum (56) der zweiten Kupplung (K2) verbunden ist,
**dadurch gekennzeichnet, dass**
der Betätigungskolben (35) der zweiten Kupplung (K2) derart ausgebildet ist, dass dieser die Fluidzuführeinrichtung (54, 53, 72) für den Ausgleichsraum (55) der ersten Kupplung (K1) wenigstens teilweise aufnimmt und der Betätigungskolben (35) der zweiten Kupplung (K2) zwei Betätigungskolbenelemente (35a, 35b) umfasst, welche Durchtrittsöffnungen (53) zwischen sich einschließen, welche Bestandteil der Fluidzuführeinrichtung (54, 53, 72) für den Ausgleichsraum (55) der ersten Kupplung (K1) sind.

2. Mehrfachkupplungseinrichtung (1) nach Anspruch 1,
**dadurch gekennzeichnet, dass**
der Ausgleichsraum (56) der zweiten Kupplung (K2) eine Überlauföffnung (72) aufweist und dass die Fluidzuführeinrichtung (54, 53, 72) für den Ausgleichsraum (55) der ersten Kupplung (K1) mit der Überlauföffnung (72) des Ausgleichsraums (56) der zweiten Kupplung (K2) verbunden ist.

3. Mehrfachkupplungseinrichtung (1) nach Anspruch 1 oder 2,
**dadurch gekennzeichnet, dass**
wenigstens einer der beiden Betätigungskolbenelemente (35a, 35b), vorzugsweise axial abstehende und vorzugsweise radial ausgerichtete Stege (83) aufweist, welche die beiden Betätigungskolbenelemente (35a, 35b) die Durchtrittsöffnungen (53) bildend beabstandet.

4. Mehrfachkupplungseinrichtung (1) nach einem der vorangegangenen Ansprüche,
**dadurch gekennzeichnet, dass** wenigstens eine Durchtrittsöffnung (54) vorgesehen ist, welche den Ausgleichsraum (55) der ersten Kupplung (K1) mit der Fluidzuführeinrichtung (54, 53, 72) für den Ausgleichsraum (55) der ersten Kupplung (K1) verbindet.

5. Mehrfachkupplungseinrichtung (1) nach einem der vorangegangenen Ansprüche,
**dadurch gekennzeichnet, dass**
der Ausgleichsraum (55) der ersten Kupplung (K1) eine Überlauföffnung (73) aufweist.

## Claims

1. Multiple clutch device, in particular dual clutch device (1)
a) having a first clutch (K1),
- with a pressure space (76) to which a fluid for displacing an actuating piston (34) actuating the first clutch (K1) can be supplied,
- with a compensating space (55) to which a fluid can be supplied in order at least partially to compensate a centrifugally induced excessive pressure rise, occurring with increasing rotational speed, of the fluid in the pressure space (76) of the first clutch (K1), and
- with a fluid supply device (54, 53, 72) in order to supply the compensating space (55) of the first clutch (K1) with the fluid for the at least partial compensation of the centrifugally induced excessive pressure rise of the fluid in the pressure space (76) of the first clutch (K1),
b) having a second clutch (K2)
- with a pressure space (77) to which a fluid for displacing an actuating piston (35) actuating the second clutch (K2) can be supplied,
- with a compensating space (56) to which a fluid can be supplied in order at least partially to compensate a centrifugally induced excessive pressure rise, occurring with increasing rotational speed, of the fluid in the pressure space (77) of the second clutch (K2), and
- with a fluid supply device (82) in order to supply the compensating space (56) of the second clutch (K2) with the fluid for the at least partial compensation of the centrifugally induced excessive pressure rise of the fluid in the pressure space (76) of the second clutch (K2),
the fluid supply device (54, 53, 72) for the compensating space (55) of the first clutch (K1) being connected to the compensating space (56) of the second clutch (K2),
**characterized in that**
the actuating piston (35) of the second clutch (K2) is designed in such a way that it at least partially receives the fluid supply device (54, 53, 72) for the compensating space (55) of the first clutch (K1), and the actuating piston (35) of the second clutch (K2) comprises two actuating-piston elements (35a, 35b) which between them enclose passage orifices (53) which are an integral part of the fluid supply device (54, 53, 72) for the compensating space (55) of the first clutch (K1).

2. Multiple clutch device (1) according to Claim 1,
**characterized in that**
the compensating space (56) of the second clutch (K2) has an overflow orifice (72), and **in that** the fluid supply device (54, 53, 72) for the compensating space (55) of the first clutch (K1) is connected to the overflow orifice (72) of the compensating space (56) of the second clutch (K2).

3. Multiple clutch device (1) according to Claim 1 or 2,
**characterized in that**
at least one of the two actuating-piston elements (35a, 35b) has preferably axially projecting and preferably radially oriented webs (83) which space apart the two actuating-piston elements (35a, 35b) so as to form the passage orifices (53).

4. Multiple clutch device (1) according to one of the preceding claims,
**characterized in that**
at least one passage orifice (54) is provided, which connects the compensating space (55) of the first clutch (K1) to the fluid supply device (54, 53, 72) for the compensating space (55) of the first clutch (K1).

5. Multiple clutch device (1) according to one of the preceding claims,
**characterized in that**
the compensating space (55) of the first clutch (K1) has an overflow orifice (73).

## Revendications

1. Dispositif d'embrayage multiple, en particulier dispositif à double embrayage (1),
a) comprenant un premier embrayage (K1)
- avec une chambre de pression (76), à laquelle on peut acheminer un fluide pour déplacer un piston d'actionnement (34) actionnant le premier embrayage (K1),
- avec une chambre de compensation (55) à laquelle on peut acheminer un fluide afin de compenser au moins en partie une augmentation de la pression du fluide provoquée par la force centrifuge et se produisant avec l'augmentation de la vitesse de rotation, dans la chambre de pression (76) du premier embrayage (K1), et
- avec un dispositif d'alimentation en fluide (54, 53, 72) pour acheminer à la chambre de compensation (55) du premier embrayage (K1) le fluide pour réaliser la compensation au moins partielle de l'augmentation de la pression de fluide due à la force centrifuge dans la chambre de pression (76) du premier embrayage (K1),
b) comprenant un deuxième embrayage (K2)
- avec une chambre de pression (77), à laquelle on peut acheminer un fluide pour déplacer un piston d'actionnement (35) actionnant le deuxième embrayage (K2),
- avec une chambre de compensation (56) à laquelle on peut acheminer un fluide afin de compenser au moins en partie une augmentation de pression du fluide provoquée par la force centrifuge et se produisant avec l'augmentation de la vitesse de rotation, dans la chambre de pression (77) du deuxième embrayage (K2), et
- avec un dispositif d'alimentation en fluide (82) pour acheminer à la chambre de compensation (56) du deuxième embrayage (K2) le fluide pour réaliser la compensation au moins partielle de l'augmentation de la pression de fluide due à la force centrifuge dans la chambre de pression (76) du deuxième embrayage (K2),
le dispositif d'alimentation en fluide (54, 53, 72) pour la chambre de compensation (55) du premier embrayage (K1) étant connecté à la chambre de compensation (56) du deuxième embrayage (K2),
**caractérisé en ce que**
le piston d'actionnement (35) du deuxième embrayage (K2) est réalisé de telle sorte que celui-ci reçoive au moins en partie le dispositif d'alimentation en fluide (54, 53, 72) pour la chambre de compensation (55) du premier embrayage (K1) et **en ce que** le piston d'actionnement (35) du deuxième embrayage (K2) comprend deux éléments de piston d'actionnement (35a, 35b) qui renferment entre eux des ouvertures de passage (53) qui font partie du dispositif d'alimentation en fluide (54, 53, 72) pour la chambre de compensation (55) du premier embrayage (K1).

2. Dispositif d'embrayage multiple (1) selon la revendication 1, **caractérisé en ce que**
la chambre de compensation (56) du deuxième embrayage (K2) présente une ouverture de débordement (72) et **en ce que** le dispositif d'alimentation en fluide (54, 53, 72) pour la chambre de compensation (55) du premier embrayage (K1) est connecté à l'ouverture de débordement (72) de la chambre de compensation (56) du deuxième embrayage (K2).

3. Dispositif d'embrayage multiple (1) selon la revendication 1 ou 2,
**caractérisé en ce qu'**au moins l'un des deux éléments de piston d'actionnement (35a, 35b) présente des nervures (83) saillant de préférence axialement et orientées de préférence radialement, qui séparent les deux éléments de piston d'actionnement (35a, 35b) en formant les ouvertures de passage (53).

4. Dispositif d'embrayage multiple (1) selon l'une quelconque des revendications précédentes,
**caractérisé en ce**
**qu'**au moins une ouverture de passage (54) est prévue, laquelle relie l'espace de compensation (55) du premier embrayage (K1) au dispositif d'alimentation en fluide (54, 53, 72) pour la chambre de compensation (55) du premier embrayage (K1).

5. Dispositif d'embrayage multiple (1) selon l'une quelconque des revendications précédentes,
**caractérisé en ce que**
la chambre de compensation (55) du premier embrayage (K1) présente une ouverture de débordement (73).
